# FASCICULE DE BREVET EUROPEEN

(11) **EP 2 971 920 B1**
(45) Date de publication et mention de la délivrance du brevet: **24.07.2019**
(21) Numéro de dépôt: 15725477.2
(22) Date de dépôt: 21.05.2015
(51) Int. Cl.: F16L 37/088, F16L 37/084, F16L 37/14

(54) **RACCORD TUBULAIRE A CONNEXION AUTOMATIQUE**
ROHRVERBINDUNG MIT AUTOMATISCHER VERBINDUNG
TUBULAR COUPLING WITH AUTOMATIC CONNECTION

(30) Priorité: 22.05.2014 FR 1454636
(43) Date de publication de la demande: 20.01.2016
(73) Titulaire: A. RAYMOND ET CIE, 38000 Grenoble (FR)
(72) Inventeur: CHAUPIN, Jérôme, 38830 Saint Pierre d'Allevard (FR); POGGI, Frédéric, 38600 FONTAINE (FR)
(74) Mandataire: Prugneau, Philippe
(86) Numéro de dépôt international: PCT/FR2015/051336
(87) Numéro de publication internationale: WO 2015/177472

(56) Documents cités:
- EP-A1- 1 158 236
- EP-A1- 1 770 321
- EP-A1- 1 801 484
- DE-A1-102006 047 267
- FR-A1- 2 903 164
- JP-A- 2008 082 463
- US-A1- 2005 087 981
- US-A1- 2012 326 435
- US-B2- 7 651 138

## Description

### Domaine technique

La présente invention se rapporte au domaine des raccords tubulaires pour connecter des tuyaux ou conduites de fluides, par exemple des durites à carburant pour véhicules automobiles.

Plus particulièrement, l'invention concerne un raccord tubulaire comprenant un connecteur femelle dans lequel un connecteur mâle pourvu d'une collerette annulaire est destiné à être inséré axialement, et un élément de connexion qui s'étend suivant une direction transversale dans le connecteur femelle et qui est conçu pour être déformé élastiquement radialement vers l'extérieur du connecteur femelle par interférence mécanique avec ladite collerette lors de l'insertion du connecteur mâle dans le connecteur femelle et, en réaction à cette déformation élastique radiale, se déplacer par lui-même suivant ladite direction transversale vers l'intérieur du connecteur femelle.

### Technique antérieure

Un tel raccord tubulaire pour raccorder des durites est déjà connu notamment des documents de brevet US 2012/0326435 ou US 2005/0087981.

Dans ces raccords tubulaires connus, l'élément de connexion constitue un élément de retenue pour bloquer le connecteur mâle en position quand il est complètement enfoncé dans le connecteur femelle, notamment à l'aide d'un verrou s'étendant transversalement dans le connecteur femelle derrière la collerette du connecteur mâle de manière à le bloquer axialement.

L'élément de connexion ou de retenue comprend en outre deux pattes écartées l'une de l'autre, comme une sorte de cavalier en forme de U, qui s'étendent suivant une direction transversale à l'intérieur du connecteur femelle, chaque patte ayant une face frontale d'interférence avec la collerette du connecteur mâle.

L'élément de connexion est d'abord positionné dans le connecteur femelle dans une position haute de pré-assemblage dans laquelle la base du U saille à l'extérieur du connecteur femelle et les deux pattes de l'élément de connexion s'étendent sensiblement de part et d'autre du connecteur mâle à l'avant de la collerette de celui-ci (si on considère que l'avant de la collerette correspond à la face frontale de la collerette la plus en aval suivant la direction axiale dans le sens d'insertion du connecteur mâle dans le connecteur femelle).

Lorsque le connecteur mâle est enfoncé axialement dans le connecteur femelle, la face avant de la collerette du connecteur mâle vient alors interférer avec une face avant frontale des pattes de l'élément de connexion qui est oblique par rapport à la direction axiale et également par rapport à la direction transversale. Il s'ensuit un écartement radial élastique des pattes de l'élément de connexion par réaction à la force de poussée qui s'exerce axialement sur cette face avant frontale oblique et un déplacement transversal de l'élément de connexion dans l'élément femelle par réaction à la force de poussée qui s'exerce transversalement sur cette face avant frontale oblique. Lors de l'écartement radial élastique, les pattes élastiques accumulent de l'énergie de rétractation. L'écartement maximum des pattes élastiques pendant le déplacement transversal de l'élément de connexion correspond au diamètre de la collerette.

Lors de la descente de l'élément de connexion dans le connecteur femelle, les pattes s'écartent sur la collerette jusqu'à atteindre l'écartement maximum à savoir le diamètre de la collerette. Puis, une fois le diamètre passé et grâce à l'énergie accumulée par l'écartement élastique, les pattes se rétractent selon une composante de force de poussée qui s'étend suivant la direction transversale et qui continue brièvement le déplacement transversal de l'élément de connexion vers l'intérieur du connecteur femelle.

On obtient ainsi un raccord à connexion automatique.

L'élément de connexion dans ce raccord tubulaire connu comporte en outre un cadre fixe s'étendant transversalement dans le connecteur femelle parallèlement aux pattes de l'élément de connexion et qui comprend à sa base une languette élastique qui s'étend de manière oblique par rapport à la direction axiale du connecteur femelle.

Cette languette est agencée de telle sorte que lors de l'enfoncement axial du connecteur mâle dans le connecteur femelle, le connecteur mâle pousse la languette pour la déplacer axialement par rapport à sa base. De ce fait, la languette élastique emmagasine par compression une énergie, et lors du franchissement du diamètre de la collerette par les pattes élastiques de l'élément de connexion pendant son déplacement transversal, la languette est libérée et produit une force de poussée sur l'élément de connexion qui tend à le déplacer vers l'intérieur du connecteur femelle suivant la direction transversale.

L'élément de connexion est alors dans sa position basse de retenue dans laquelle le verrou empêche un déplacement axial du connecteur mâle dans le connecteur femelle. Dans cette position basse, l'élément de connexion apparaît quasiment escamoté dans le connecteur femelle. La languette permet donc de prolonger l'enfoncement de l'élément de connexion dans le connecteur femelle après franchissement du diamètre de la collerette du connecteur mâle lors de son déplacement transversal.

Ce raccord tubulaire connu présente cependant plusieurs inconvénients.

D'abord, il nécessite plusieurs pièces séparées qui interagissent entre elles pour réaliser la retenue ou le blocage du connecteur mâle dans le connecteur femelle et le déplacement automatique de l'élément de connexion vers l'intérieur du connecteur femelle.

Ces différentes pièces nécessitent une coordination cinématique complexe entre elles. Elles augmentent aussi les coûts de fabrication du raccord tubulaire. Ce raccord tubulaire présente également un corps très ajouré ce qui le rend moins robuste.

Ensuite, la course de l'élément de connexion, après franchissement de la collerette, dépend de la grandeur de la déformation de la languette et en pratique cette course est relativement faible du fait de la miniaturisation des pièces.

Il en résulte que l'écart entre la position haute de pré-assemblage et la position basse de l'élément de connexion est faible et donc cet écart est difficilement perceptible que ce soit sur le plan visuel ou sur le plan tactile.

### Résumé de l'invention

Le but de l'invention est donc de pallier les inconvénients indiqués plus haut.

A cet effet, l'invention a pour objet un raccord tubulaire comprenant un connecteur femelle dans lequel un connecteur mâle pourvu d'une collerette annulaire est destiné à être inséré axialement, et un élément de connexion qui s'étend suivant une direction transversale dans le connecteur femelle et qui est conçu pour être déformé élastiquement radialement vers l'extérieur du connecteur femelle par interférence mécanique avec la collerette lors de l'insertion du connecteur mâle dans le connecteur femelle et, en réaction à cette déformation élastique radiale, se déplacer par lui-même suivant la direction transversale vers l'intérieur du connecteur femelle, caractérisé en ce qu'après la réaction à la déformation élastique radiale de l'élément de connexion sur la collerette du connecteur mâle, une saillie de l'élément de connexion, faisant saillie dans une direction axiale sur une face orientée axialement de l'élément de connexion, vient en appui sur une rampe de guidage du connecteur femelle et exerce par rétractation élastique de l'élément de connexion une pression sur une rampe de guidage, de telle sorte à produire une force de poussée qui prolonge le déplacement de l'élément de connexion suivant la direction transversale vers l'intérieur du connecteur femelle.

L'idée à la base de l'invention est donc de transformer efficacement l'énergie qui est libérée par l'élément de connexion lors de sa rétractation élastique en une force de poussée orientée et contrôlée dans la direction transversale de déplacement de l'élément de connexion vers l'intérieur du connecteur femelle. En particulier, la rampe peut être prévue pour s'étendre au delà de la collerette suivant la direction transversale de façon à allonger le déplacement de l'élément de connexion suivant la direction transversale.

Avec cet agencement selon l'invention, on peut déplacer l'élément de connexion suivant la direction transversale sur une course plus longue ce qui fait qu'il est possible de positionner l'élément de connexion en position de fixation de pré-assemblage à une hauteur plus importante que dans le raccord tubulaire connu présenté plus haut et par ailleurs on peut forcer l'enfoncement de l'élément de connexion dans le connecteur femelle sur une distance plus importante aussi.

Il en résulte qu'avec l'agencement selon l'invention, on peut avoir un écart de positionnement de l'élément de connexion entre sa position de pré-assemblage et sa position basse qui est suffisamment important pour constituer un témoin fiable de contrôle visuel ou tactile du raccordement complet du connecteur mâle dans le connecteur femelle. De plus, avec cet agencement de l'invention, on permet un recouvrement suffisant de l'élément de connexion sur la collerette pour garantir une bonne tenue mécanique.

Par ailleurs, l'agencement selon l'invention peut être mis en oeuvre dans un corps de connecteur femelle qui reste relativement fermé (c'est à dire qui est peu ajouré) ce qui permet de réduire les effets de dépôts de sources de contaminants comme la poussière à l'intérieur du connecteur femelle et d'augmenter la robustesse du corps.

Le raccord selon l'invention peut présenter les particularités suivantes :
- ledit élément de connexion a une forme en U avec deux pattes écartées l'une de l'autre qui s'étendent suivant ladite direction transversale, chaque patte ayant une face frontale d'interférence avec ladite collerette, en ce que le connecteur femelle comporte une surface intérieure qui définit deux rampes de guidage qui s'étendent suivant ladite direction transversale de façon oblique l'une par rapport à l'autre et en ce que deux saillies sont prévues respectivement sur les deux pattes de l'élément de connexion de façon à venir appuyer respectivement sur les dites rampes de guidage pour produire ladite force de poussée;
- chaque rampe de guidage peut avoir une surface de contact qui comporte des nervures ou des bosselages;
- chaque rampe de guidage peut avoir une extrémité de guidage qui est terminée par un creux dans lequel vient s'engager la saillie d'une patte correspondante de l'élément de connexion;
- ledit élément de connexion se déplace par lui-même suivant ladite direction transversale entre une position haute de pré-assemblage dans laquelle il saille à l'extérieur du connecteur femelle et une position basse de retenue dans laquelle il est complètement enfoncé à l'intérieur du connecteur femelle et affleure la surface extérieure du connecteur femelle;
- le raccord peut comporter en outre un témoin visuel de contrôle de bon montage, par exemple un marquage apposé à la surface de la rampe et qui disparaît derrière la saillie correspondante quand l'élément de connexion est complètement enfoncé dans le connecteur femelle ou bien un marquage apposée sur l'élément de connexion recouvert lors de son insertion dans le connecteur femelle.
- le raccord comporte une agrafe conçue pour être insérée dans l'élément de connexion lors de l'insertion du connecteur mâle dans le connecteur femelle et servir de témoin de montage du raccord.

D'autres caractéristiques, avantages et détails de la présente invention ressortiront à la lecture de la description suivante d'un exemple de réalisation de l'invention donné à titre illustratif et non limitatif, cette description étant réalisée en référence avec les dessins présentés ci-dessous.

### Présentation sommaire des dessins

La figure 1 illustre de façon schématique en vue éclatée le raccord tubulaire selon l'invention comportant ici un connecteur femelle, un bague interne au connecteur femelle, un connecteur mâle comportant une collerette et l'élément de connexion ici un cavalier en forme de U;
Les figures 2a et 2b illustrent de façon schématique une vue de profil le raccord tubulaire selon l'invention respectivement avec l'élément de connexion en position haute de pré-assemblage qui saille à l'extérieur du connecteur femelle et l'élément de connexion en position basse de retenue qui affleure la surface extérieure du connecteur femelle;
Les figures 3a et 3b illustrent de façon schématique respectivement selon une vue en coupe transversale et une vue en perspective, un état d'interférence mécanique entre l'élément de connexion et la collerette du connecteur mâle dans une première phase d'insertion du connecteur mâle dans le connecteur femelle;
Les figures 4a et 4b illustrent de façon schématique respectivement selon une vue en coupe transversale et une vue en perspective, un second état d'interférence entre l'élément de connexion et la collerette du connecteur mâle dans une seconde phase subséquente d'insertion du connecteur mâle dans le connecteur femelle;
Les figures 5a et 5b illustrent de façon schématique respectivement selon une vue en coupe transversale et une vue en perspective, un état d'interférence mécanique entre l'élément de connexion et la collerette du connecteur mâle dans une troisième phase subséquente d'insertion du connecteur mâle dans le connecteur femelle ;
Les figures 6 et 7 illustrent de façon schématique selon une coupe transversale le raccord connecté selon deux modes de réalisation différents ;
La figure 8 illustre de façon schématique en vue éclatée un mode de réalisation particulier du raccord tubulaire selon l'invention ayant une agrafe comme témoin de montage du raccord en deux temps ;
La figure 9 illustre de façon schématique selon une vue de profil les deux positions de l'agrafe dans le raccord tubulaire selon l'invention ;
La figure 10 illustre de façon schématique selon une vue en coupe transversale le raccord tubulaire présentant l'agrafe dans une position basse.

### Description des modes de réalisation

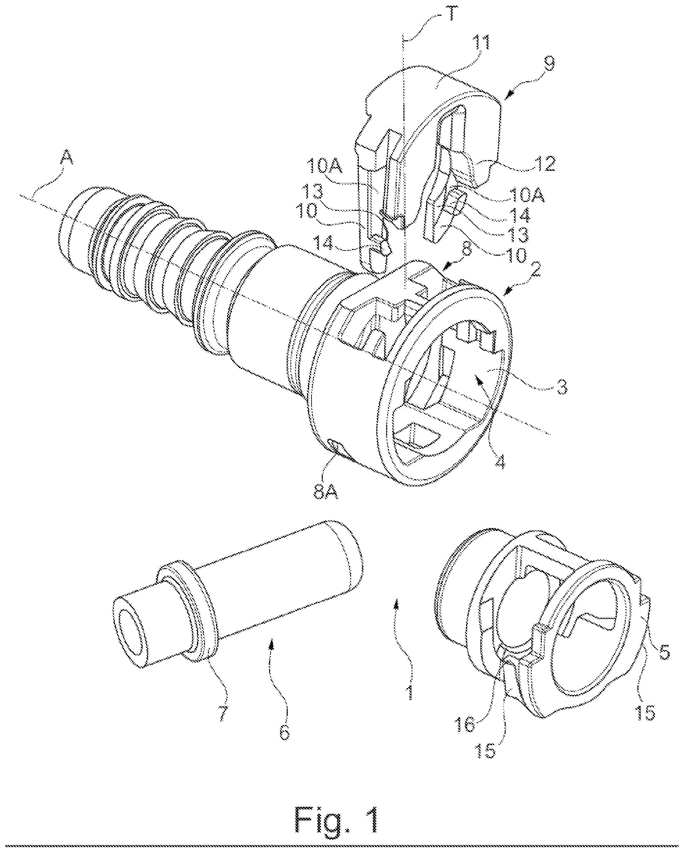

Comme visible sur la figure 1, le raccord tubulaire selon l'invention comporte un embout tubulaire de connexion femelle (connecteur femelle) 2 ici en deux parties comprenant un corps principal tubulaire 3 qui s'étend suivant une direction axiale A et qui est muni d'une ouverture axiale 4 et une bague 5 emboitable axialement dans l'ouverture 4 du corps principal 3.

Il est entendu que l'invention s'étend à un embout femelle en une seule partie ou monobloc.

Dans le raccord tubulaire 1, un embout tubulaire de connexion mâle (connecteur mâle) 6 est prévu pour s'insérer axialement dans le connecteur femelle, ici dans la bague 5.

Le connecteur mâle 6 est en forme de tube cylindrique allongé et présente une collerette annulaire 7 à sa périphérie circulaire, le diamètre de la collerette annulaire 7 étant légèrement inférieur à celui du diamètre intérieur de la bague 5. Comme visible encore sur la figure 1, le corps du connecteur femelle présente un évidement intérieur faisant apparaître une ouverture radiale 8 sur le dessus qui forme une sorte de glissière dans laquelle vient s'insérer transversalement et coulisser l'élément de connexion 9.

L'élément de connexion 9 se présente ici comme un cavalier en forme de U avec deux pattes élastiques 10 espacées l'une de l'autre et reliées entre elles à la base 11 du U.

Les deux pattes 10 sont profilées pour former des sortes de poutres qui viennent coulisser dans les rainures de la glissière définie par l'ouverture radiale 8.

L'élément de connexion comprend également un verrou 12 conçu pour venir à l'arrière de la collerette du connecteur mâle 6 de manière à le retenir et le bloquer suivant la direction axiale A quand le connecteur mâle est complètement enfoncé à l'intérieur du connecteur femelle 2.

Les pattes de l'élément de connexion 9 sont aussi agencées pour que l'élément de connexion se déplace par lui-même vers l'intérieur du connecteur femelle 2 suivant la direction transversale T grâce à une force de poussée qui est produite par réaction à une déformation élastique radiale des pattes qui survient lors de l'enfoncement du connecteur mâle dans le connecteur femelle.

Plus particulièrement, chaque patte 10 de l'élément de connexion 9 présente une face frontale 10A qui fait face à la collerette 7 du connecteur mâle 6 quand celui-ci est engagé dans le connecteur femelle 2.

La face frontale 10A de chaque patte 10 comporte dans sa partie située en dessous de la médiane de l'ouverture axiale 4 du connecteur femelle 2, une surface oblique 13 qui, quand l'élément de connexion 9 est en position haute pré-assemblage à l'intérieur du connecteur femelle 2, est destinée à interférer avec la collerette 7 du connecteur mâle 6 quand celui-ci est enfoncé dans le connecteur femelle 2.

La surface 13 s'étend de manière oblique à la fois par rapport à la direction axiale A et aussi par rapport à la direction transversale T quand l'élément de connexion est inséré dans le connecteur femelle pour créer cette force de poussée orientée suivant la direction transversale T.

Par ailleurs, selon l'invention, il est prévu en outre par exemple sur la face frontale 10A de chaque patte 10 de l'élément de connexion (et à ici dans le haut de la surface oblique 13), une saillie 14 qui saille suivant la direction axiale A.

Deux rampes de guidage 15 obliques l'une par rapport à l'autre sont formées ici sur les côtés latéraux de la surface extérieure périphérique de la bague 5. Ces deux rampes de guidage 15 sont en vis-à-vis de fentes radiales de dégagement 8A visibles sur la figure 1 qui sont prévues dans la surface périphérique annulaire du connecteur femelle 2. Ces fentes radiales laissent un espace libre pour permettre l'écartement radial des pattes de l'élément de connexion à l'intérieur du connecteur femelle, ces pattes pouvant en outre être munies chacune d'un cran latéral qui s'engage dans le bord supérieur d'une fente radiale pour empêcher le retrait de l'élément de connexion hors du connecteur femelle. Sans restreindre la portée de l'invention, un cran peut également être placé sur la partie non flexible de l'élément de connexion de manière à s'engager dans la fente radiale du connecteur femelle (non représenté sur les figures).

Ces deux rampes obliques 15 démarrent sensiblement en dessous de la médiane de l'ouverture 4 du connecteur femelle et se rapprochent l'une de l'autre en allant suivant la direction axiale T vers le côté du connecteur femelle qui est diamétralement opposé à l'ouverture radiale 8. Ces deux rampes de guidage 15 sont ici rectilignes, décalées axialement de la collerette et forment ensembles une sorte de V qui vu suivant la direction axiale englobe la collerette du connecteur mâle (en d'autres termes la collerette s'inscrit à l'intérieur du V) .

Les saillies 14 et les rampes de guidage 15 sont agencées de telle sorte que quand l'élément de connexion 9 est inséré dans le connecteur femelle 2 et qu'il franchit la collerette 7 du connecteur mâle 6 (c'est-à-dire passe de l'avant à l'arrière de la collerette 7), les pattes étant alors complètement écartées l'une de l'autre, chaque saillie 14 d'une patte correspondante vient en appui sur une rampe de guidage correspondante 15 tandis que l'appui de la patte elle-même sur la périphérie de la collerette 7 du connecteur mâle tend à s'effacer. Il y a en quelque sorte une substitution entre l'appui sur la périphérie de la collerette et l'appui sur la rampe.

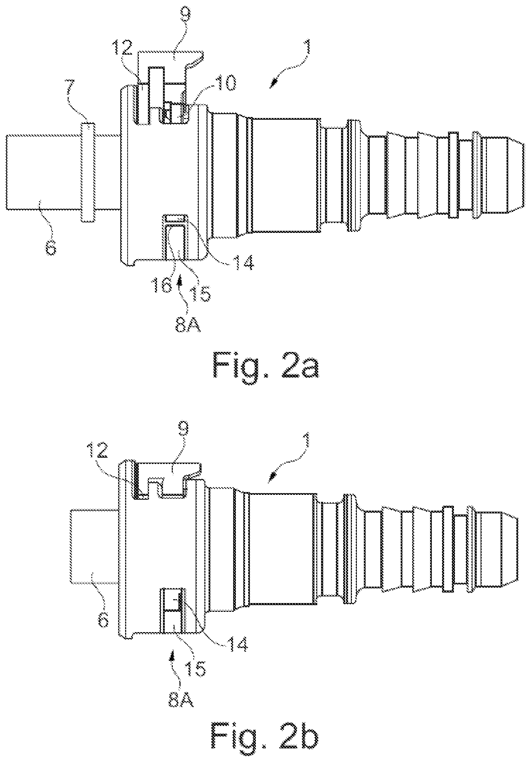

Sur la figure 2a, le connecteur mâle 6 est inséré partiellement dans le connecteur femelle 2.

L'élément de connexion 9 est en position haute de pré-assemblage dans le connecteur femelle 2.

Les pattes 10 de l'élément de connexion 9 sont à l'avant de la collerette 7 du connecteur mâle.

La saillie 14 de chaque patte 10 est en butée sur une arête supérieure 16 d'une rampe de guidage 15 qui est visible par la fente radiale 8A du connecteur femelle.

Sur la figure 2b, le connecteur mâle 6 est complètement enfoncé dans le connecteur femelle 2.

L'élément de connexion 9 est en position basse de retenue et de blocage dans le connecteur femelle. Le verrou 12 de l'élément de connexion 9 est à l'arrière de la collerette 7 du connecteur mâle ce qui empêche tout déplacement axial du connecteur mâle 6 dans le connecteur femelle 2.

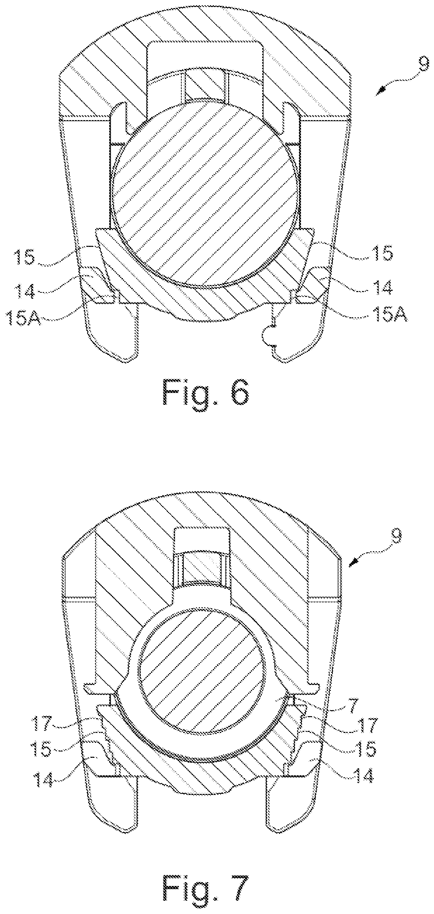

La saillie 14 sur chaque patte est ici bloquée dans un creux 15a en bas de la rampe correspondante 15 ce qui empêche le retrait de l'élément de connexion hors du connecteur femelle par simple traction sur l'élément de connexion 9, comme représenté sur la figure 6. Toutefois, on peut prévoir un possible retrait de l'élément de connexion hors du connecteur femelle suite à un dégagement volontaire de la saillie 14 du creux de la rampe à l'aide d'une pointe par exemple.

Comme visible sur la figure 2b, en position basse de l'élément de connexion, le haut de l'élément de connexion 9 (c'est à dire la base du U du cavalier) affleure la surface extérieure (ici la surface supérieure) du connecteur femelle.

En position haute de pré-assemblage de l'élément de connexion, le haut de l'élément de connexion 9 saille de façon suffisamment importante par rapport à la surface extérieure supérieure du connecteur femelle, par exemple de l'ordre de 4 à 5mm, pour qu'un opérateur puisse différencier de manière sûre par contrôle tactile ou contrôle visuel la position basse et la position haute de pré-assemblage de l'élément de connexion.

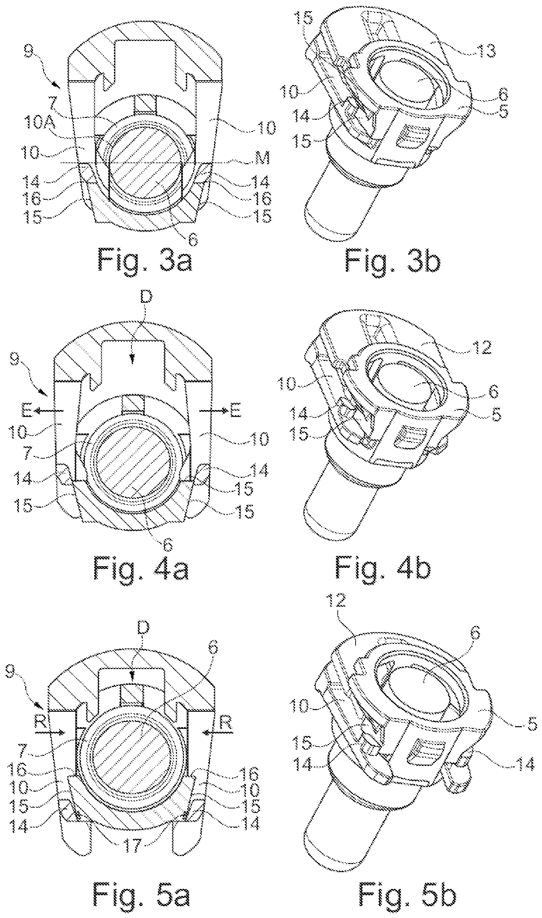

La cinématique du déplacement de l'élément de connexion par lui-même dans le connecteur femelle est illustrée sur les figures 3a à 5b.

Sur les figures 3a et 3b, l'élément de connexion 9 est en position haute de pré-assemblage. Le connecteur mâle 6 est partiellement inséré dans le connecteur femelle 2 et se trouve dans une position de pré-assemblage.

Les pattes 10 de l'élément de connexion 9 sont à l'avant de la collerette 7 du connecteur mâle.

On voit notamment que la surface oblique 10A sur chaque patte 10 (la surface oblique 10A est ici à l'arrière de la patte 10 sur la figure) est disposée dans un genou de la patte qui s'étend en dessous de la médiane M de l'ouverture axiale du connecteur femelle 2 et vient en interférence mécanique suivant la direction axiale avec la collerette 7 du connecteur mâle 6.

Chaque saillie 14 se trouve ici en butée sur une arête 16 à l'extrémité d'une rampe de guidage 15. Cet agencement permet d'empêcher l'enfoncement involontaire de l'élément de connexion dans le connecteur femelle en l'absence du connecteur mâle dans le connecteur femelle.

Sur les figures 4a et 4b, le connecteur mâle 6 a maintenant été enfoncé un peu plus dans le connecteur femelle et la collerette 7 exerce une pression axiale sur la surface oblique 10A des pattes 10 de l'élément de connexion 9.

Cette poussée axiale provoque l'écartement radial des pattes 10 comme illustré par les flèches E et en même temps un déplacement en translation suivant la direction transversale vers l'intérieur du connecteur femelle comme illustré par la flèche D lorsque la saillie 14 est dégagée de la butée.

On voit sur ces figures que chaque saillie 14 une fois dégagée de l'arrête 16 de la rampe 15 permet à l'élément de connexion de se déplacer suivant la flèche D. Chaque saillie 14 peut déjà se placer face à une rampe 15.

Sur les figures 5a et 5b, le connecteur mâle 6 est maintenant complètement enfoncé dans le connecteur femelle 2.

Les pattes 10 en se déplaçant transversalement dans le connecteur femelle passent "en dessous" de la collerette 7 du connecteur mâle, c'est-à-dire franchissent la médiane de la collerette 7 suivant la direction D, et se rétractent élastiquement en se rapprochant l'une de l'autre comme illustré par les flèches R.

Les saillies 14 exercent alors une pression sur les rampes 15, laquelle pression est transformée en une composante d'une force de poussée comme illustré par la flèche D ce qui a pour effet que l'élément de connexion 9 poursuit par lui-même son déplacement vers l'intérieur du connecteur femelle jusqu'à ce que les saillies arrivent à l'extrémité basse des rampes 15. On comprendra que chaque saillie 14 se déplace par glissement sur la rampe 15 correspondante jusqu'à ce que la pression qu'il exerce sur celle-ci devienne nulle. L'élément de connexion 9 a alors atteint sa position basse de retenue et de blocage à l'intérieur du connecteur femelle.

Dans un mode de réalisation de l'invention représenté sur la figure 7, on peut prévoir à la surface de chaque rampe 15 des nervures 17 ou des bosselages placés de telle sorte que le passage de la saillie 14 sur ces nervures ou bosselages 17 provoque un bruit tel qu'un cliquetis perceptible qui sert d'indicateur sonore de fin de course pour l'élément de connexion. Ces nervures sont également conçues pour autoriser uniquement la descente de l'élément de blocage en position basse et interdire sa remontée en position de pré-assemblage face à des vibrations. La remontée en position de pré-assemblage peut toutefois être effectuée en exerçant une force de traction suffisante pour déformer les pattes.

On peut aussi prévoir dans le raccord tubulaire 1 selon l'invention, un témoin visuel de contrôle de l'enfoncement complet du connecteur mâle dans le connecteur femelle sous la forme d'un marquage apposé par exemple à l'extrémité terminale de chaque rampe, ce marquage étant recouvert par une saillie quand l'élément de connexion est arrivé dans sa position basse de retenue et de blocage. On peut prévoir en outre un marquage apposé sur l'élément de connexion qui est recouvert lors de son insertion dans le connecteur femelle.

L'élément de connexion dans le raccord à connexion automatique selon l'invention peut s'adapter à des connecteurs mâles de différents profils ou de différents diamètres ainsi qu'à des collerettes de rayons différents.

Le raccord tubulaire 1 selon l'invention comprend peu de pièces distinctes lesquelles peuvent toutes être réalisées en matière plastique, par exemple par moulage par injection.

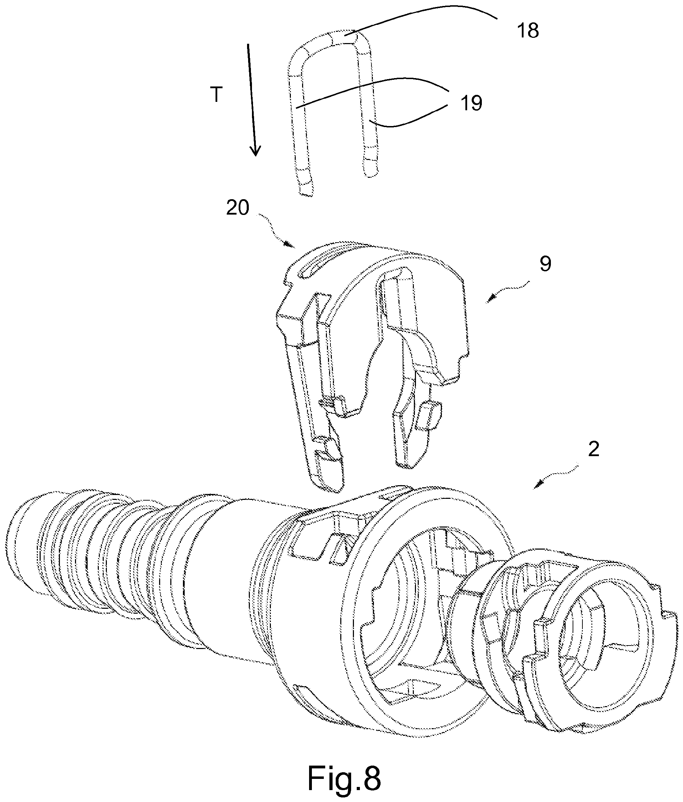

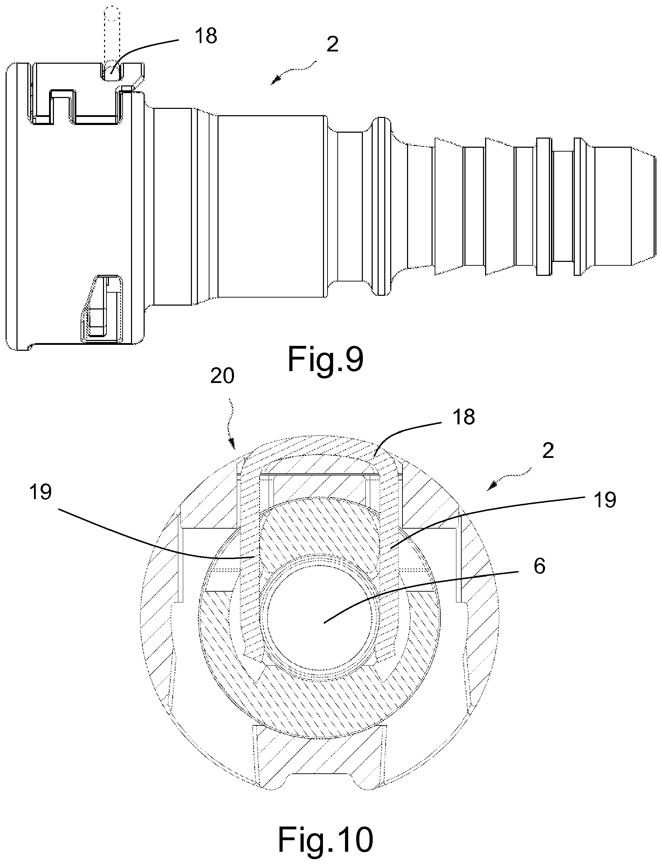

Selon une variante de réalisation de l'invention représentée sur la figure 8, on peut prévoir dans le raccord tubulaire une agrafe 18 jouant le rôle d'un témoin de montage du raccord en deux temps. Lorsque le connecteur mâle 6 est correctement inséré dans le connecteur femelle, l'agrafe 18 se trouve en saillie du raccord, c'est-à-dire en position haute, comme visible en pointillés sur la figure 9, et permet une première vérification visuelle et/ou tactile du bon montage du raccord par un opérateur.

Une deuxième vérification est ensuite effectuée par un second opérateur qui constate à son tour le positionnement en saillie de l'agrafe 18 et l'enfonce manuellement dans le raccord jusqu'à ce qu'elle ne soit plus en saillie, c'est-à-dire en position basse, comme visible en trait plein sur la figure 8 et sur la figure 10.

Cette vérification en deux temps permet de constater le bon montage du raccord et limite ainsi les erreurs de montage en chaîne d'assemblage.

L'agrafe se présente ici sous la forme d'un crochet formé par deux pattes 19 sensiblement flexibles et parallèles, comme visibles sur les figures 8 et 10.

Les pattes 19 de l'agrafe 18 sont conçues pour être insérées chacune dans une fente 20 de l'élément de connexion 9 prévue à cet effet, selon la direction transversale T visible sur la figure 8 et avant l'insertion du connecteur mâle.

Une fois insérées, les pattes flexibles de l'agrafe 18 exercent une force de pression sur le profil interne du connecteur femelle 2 prévenant le retrait non intentionnel de l'agrafe 18.

On comprendra également que lors de l'insertion du connecteur mâle 6 dans le connecteur femelle 2, l'élément de connexion 9 se déplacera transversalement vers l'intérieur du connecteur femelle 2 pour verrouiller le connecteur mâle 6, alors que l'agrafe 18 restera en position haute, en saillie du raccord. Lorsque le connecteur mâle est correctement inséré, les extrémités des pattes 19 de l'agrafe sont posées sur le connecteur mâle 6 empêchant l'agrafe 18 de descendre en position basse sans exercer une force de poussée supplémentaire.

Notons que le mécanisme de descente de l'élément de connexion 9 n'interagit pas avec le mécanisme de descente de l'agrafe 18 puisque l'agrafe est poussée en position basse manuellement par un opérateur.

## Revendications

1. Raccord tubulaire comprenant un connecteur femelle (2) dans lequel un connecteur mâle (6) pourvu d'une collerette (7) annulaire est destiné à être inséré axialement, et un élément de connexion (9) qui s'étend suivant une direction transversale (T) dans ledit connecteur femelle (2) et qui est conçu pour être déformé élastiquement radialement vers l'extérieur dudit connecteur femelle (2) par interférence mécanique avec ladite collerette (7) lors de ladite insertion dudit connecteur mâle (6) dans ledit connecteur femelle (2) et, en réaction à cette déformation élastique radiale, se déplacer par lui-même suivant ladite direction transversale (T) vers l'intérieur dudit connecteur femelle (2), **caractérisé en ce qu'**après la réaction à ladite déformation élastique radiale dudit élément de connexion (9) sur ladite collerette (7) dudit connecteur mâle (6), une saillie (14) dudit élément de connexion (9), faisant saillie dans une direction axiale sur une face orientée axialement dudit élément de connexion (9), vient en appui sur une rampe de guidage (15) dudit connecteur femelle (2) et exerce par rétractation élastique dudit élément de connexion (9) une pression sur ladite rampe de guidage (15), de telle sorte à produire une force de poussée qui prolonge le déplacement dudit élément de connexion (9) suivant ladite direction transversale (T) vers l'intérieur dudit connecteur femelle (2).

2. Raccord selon la revendication 1, **caractérisé en ce que** ledit élément de connexion (9) a une forme en U avec deux pattes (10) écartées l'une de l'autre qui s'étendent suivant ladite direction transversale (T), chaque patte (10) ayant une face frontale (10A) d'interférence avec ladite collerette (7), **en ce que** ledit connecteur femelle (2) comporte une surface intérieure qui définit deux rampes de guidage (15) qui s'étendent suivant ladite direction transversale (T) de façon oblique l'une par rapport à l'autre et **en ce que** deux saillies (14) sont prévues respectivement sur lesdites deux pattes (10) dudit élément de connexion (9) de façon à venir appuyer respectivement sur lesdites rampes de guidage (15) pour produire ladite force de poussée.

3. Raccord selon la revendication 1, **caractérisé en ce que** ladite rampe de guidage (15) a une surface de contact qui comporte des nervures ou des bosselages (17).

4. Raccord selon la revendication 2, **caractérisé en ce que** chaque rampe de guidage (15) a une extrémité de guidage qui est terminée par un creux dans lequel vient s'engager ladite saillie (14) d'une patte (10) correspondante dudit élément de connexion (9).

5. Raccord selon la revendication 1, **caractérisé en ce que** ledit élément de connexion (9) se déplace par lui-même suivant ladite direction transversale (T) entre une position haute de pré-assemblage dans laquelle il saille à l'extérieur dudit connecteur femelle (2) et une position basse de retenue dans laquelle il est complètement enfoncé à l'intérieur dudit connecteur femelle (2) et affleure la surface extérieure dudit connecteur femelle (2).

6. Raccord selon la revendication 1, **caractérisé en ce qu'**il comporte un témoin visuel de contrôle de bon montage.

7. Raccord selon l'une des revendications 1 à 6, **caractérisé en ce qu'**il comporte une agrafe (18) conçue pour être insérée dans ledit élément de connexion (9) lors de l'insertion dudit connecteur mâle (6) dans ledit connecteur femelle (2) et servir de témoin de montage dudit raccord.

## Patentansprüche

1. Rohrförmiger Anschluss, umfassend einen weiblichen Verbinder (2), in den ein mit einem ringförmigen Kragen (7) versehener männlicher Verbinder (6) dazu bestimmt ist, axial eingesetzt zu werden, und ein Verbindungselement (9), das sich gemäß einer querverlaufenden Richtung (T) in den weiblichen Verbinder (2) erstreckt und das ausgebildet ist, um durch mechanisches Zusammenwirken mit dem Kragen (7) bei dem besagten Einsetzen des männlichen Verbinders (6) in den weiblichen Verbinder (2) elastisch radial nach außen von dem weiblichen Verbinder (2) deformiert zu werden, und in Reaktion auf diese elastische radiale Deformation sich selbsttätig gemäß der querverlaufenden Richtung (T) zu dem Inneren des weiblichen Verbinders (2) zu verlagern,
**dadurch gekennzeichnet,**
**dass** nach der Reaktion auf die elastische radiale Deformation des Verbindungselements (9) auf dem Kragen (7) des männlichen Verbinders (6) ein Vorsprung (14) des Verbindungselements (9), der auf einer axial orientierten Fläche des Verbindungselements (9) in einer axialen Richtung vorspringt, sich auf einer Führungsrampe (15) des weiblichen Verbinders (2) abstützt und durch elastisches Zurückziehen des Verbindungselements (9) einen Druck auf die Führungsrampe (15) derart ausübt, dass eine Schubkraft erzeugt wird, die die Verlagerung des Verbindungselements (9) gemäß der querverlaufenden Richtung (T) zu dem Inneren des weiblichen Verbinders (2) verlängert.

2. Anschluss nach Anspruch 1, **dadurch gekennzeichnet, dass** das Verbindungselement (9) eine U-Form mit zwei voneinander beabstandeten und sich gemäß der querverlaufenden Richtung (T) erstreckenden Schenkeln (10) aufweist, wobei jeder Schenkel (10) eine frontale Wirkfläche (10a) mit dem Kragen (7) aufweist, dass der weibliche Verbinder (2) eine Innenfläche umfasst, die zwei Führungsrampen (15) definiert, die sich gemäß der querverlaufenden Richtung (T) die eine bezügliche der anderen schräg erstrecken, und dass die zwei Vorsprünge (14) jeweils an den zwei Schenkeln (10) des Verbindungselements (9) derart vorgesehen sind, dass sie sich jeweils auf den Führungsrampen (15) zum Erzeugen der Schubkraft abstützen.

3. Anschluss nach Anspruch 1, **dadurch gekennzeichnet, dass** die Führungsrampe (15) eine Kontaktfläche aufweist, die Rillen oder Buckel (17) aufweist.

4. Anschluss nach Anspruch 2, **dadurch gekennzeichnet, dass** jede Führungsrampe (15) ein Führungsende aufweist, das durch eine Aussparung abgeschlossen ist, in die der Vorsprung (14) eines entsprechenden Schenkels (10) des Verbindungselements (9) eindringt.

5. Anschluss nach Anspruch 1, **dadurch gekennzeichnet, dass** das Verbindungselement (9) sich selbsttätig gemäß der querverlaufenden Richtung (T) zwischen einer oberen Vorverbindungsposition, in der es außerhalb des weiblichen Verbinders (2) vorsteht, und einer unteren Halteposition, in der es vollständig in dem Inneren des weiblichen Verbinders (2) eingedrungen ist und die äußere Oberfläche des weiblichen Verbinders (2) bündig abschließt, verlagert.

6. Anschluss nach Anspruch 1, **dadurch gekennzeichnet, dass** dieser einen optischen Kontrollnachweis ordnungsgemäßer Montage umfasst.

7. Anschluss nach einem der Ansprüche 1 bis 6, **dadurch gekennzeichnet, dass** dieser eine Klammer (18) umfasst, die dazu ausgebildet ist, um in das Verbindungselement (9) beim Einsetzen des männlichen Verbinders (6) in den weiblichen Verbinder (2) eingesetzt zu werden und als Kontrollnachweis der Montage des Anschlusses zu dienen.

## Claims

1. A tubular coupling comprising a female connector (2) into which a male connector (6) provided with an annular collar (7) is designed to be inserted axially, and a connection element (9) that extends in a transverse direction (T) in the female connector and that is designed to be deformed resiliently and radially towards the outside of the female connector (2) by mechanically interfering with said collar (7) while said male connector (6) is being inserted into said female connector (2), and, in reaction to this radial resilient deformation, to move by itself in said transverse direction (T) towards the inside of said female connector (2), said tubular coupling being **characterized in that** after the reaction to said radial resilient deformation of said connection element (9) on said collar (7) of said male connector (6), a projection (14) of said connection element (9), projecting in an axial direction on an axially facing face of said connection element (9), comes to bear against a guide ramp (15) of said female connector (2) and, by resilient return of said connection element (9), exerts pressure on said guide ramp (15), so as to generate a thrust force that extends the movement of said connection element (9) in said transverse direction (T) towards the inside of said female connector (2) .

2. A coupling according to claim 1, **characterized in that** said connection element (9) is U-shaped with two prongs (10) spaced apart from each other and extending in said transverse direction (T), each prong (10) having an axially facing face (10A) for interfering with said collar (7), **in that** said female connector (2) has an inside surface that defines two guide ramps (15) that extend in said transverse direction (T) in a manner such as to slant relative to each other, and **in that** two projections (14) are provided on respective ones of said two prongs (10) of said connection element (9) so as to come to bear on respective ones of said guide ramps (15) in order to generate said thrust force.

3. A coupling according to claim 1, **characterized in that** said guide ramp (15) has a contact surface that is provided with ribs or with bumps (17).

4. A coupling according to claim 2, **characterized in that** each guide ramp (15) has a guide end that is terminated by a recess into which said projection (14) of a corresponding prong (10) of said connection element (9) comes to be engaged.

5. A coupling according to claim 1, **characterized in that** said connection element (9) moves by itself in said transverse direction (T) between a pre-assembly high position in which it projects outside said female connector (2) and a retaining low position in which it is fully pushed into said female connector (2) and comes flush with the outside surface of said female connector (2) .

6. A coupling according to claim 1, **characterized in that** it includes a visual indicator for checking proper assembly.

7. A coupling according to any one of claims 1 to 6, **characterized in that** it includes an indicator clip (18) designed to be inserted into said connection element (9) while said male connector (6) is being inserted into said female connector (2) and serving as an indicator of assembly of said coupling.
